# EUROPEAN PATENT APPLICATION

(11) **EP 4 520 637 A1**
(43) Date of publication of application: **12.03.2025**
(21) Application number: 23196261.4
(22) Date of filing: 08.09.2023
(51) Int. Cl.: B62D 25/08, B60R 13/08

(54) **PANEL STRUCTURE FOR NOISE, VIBRATION AND HARSHNESS REDUCTION INSIDE A FRONT COMPARTMENT OF A VEHICLE**

(71) Applicant: Volvo Car Corporation, 405 31 Göteborg (SE)
(72) Inventor: LEXBERG, Erik, 40531 Göteborg (SE); VAN DER PUTTEN, Zef, 40531 Göteborg (SE); ENGLUND, Thomas, 40531 Göteborg (SE); KHOO, Michelle, 40531 Göteborg (SE); BENTZEN, Niclas, 40531 Göteborg (SE); NICOLESCU, Gabriel, 40531 Göteborg (SE)
(74) Representative: Maiwald GmbH

(57) **Abstract**

The disclosure relates to a panel structure (10) for noise, vibration and harshness reduction inside a front compartment (30) of a vehicle (1), the panel structure (10) comprising: first attachment means (14) configured for attaching the panel structure (10) to a front compartment structure (31) of the front compartment (30) of the vehicle (1) such that the front compartment (30) is separated into a first compartment (32) and a second compartment (33); second attachment means (15) configured for attaching a climate control system (20) to the panel structure (10) such that the climate control system (20) is being located in the first compartment (32) when the panel structure (10) is attached to the front compartment structure (31); and sealing means (17) configured for sealing off the first compartment (32) of the front compartment (30) in an air-flow restricting manner against the second compartment (33) when the panel structure (10) is attached to the front compartment structure (31).

## Description

### TECHNICAL FIELD

The present disclosure relates to a panel structure for noise, vibration and harshness (NVH) reduction inside a front compartment of a vehicle, a clime control structure, a front compartment of a vehicle, a vehicle and a method for manufacturing a front compartment of a vehicle.

### BACKGROUND ART

In vehicles, even in electric vehicles, the design of the front compartment is complex given the different systems and their components that are provided inside the front compartment, such as the climate control system, and the individual requirements of such systems as well as preferences for the design of the vehicle. One exemplary preference is that it is desirable to deliver clean air from a compartment of the climate control system inside the front compartment to the cabin compartment inside the vehicle. Further, for example, it is desirable to have low NVH (noise, vibration and harshness) inside the cabin compartment, which may be the result of the operation of different systems, such as the climate control system, but also a drive system including an internal combustion engine or electric motor, or from the environment, for example.

### SUMMARY

It is an object of the invention to provide a cost-efficient and simple front compartment design of a vehicle, which fulfills several design preferences of the vehicle, in particular at least the ones mentioned above.

The object is at least partially solved by the subject matter of the independent claims of the present disclosure, wherein further examples are incorporated in the dependent claims.

According to a first aspect, there is provided a panel structure for noise, vibration and harshness reduction inside a front compartment of a vehicle, the panel structure comprising: first attachment means configured for attaching the panel structure to a front compartment structure of the front compartment of the vehicle such that the front compartment is separated into a first compartment and a second compartment; second attachment means configured for attaching a climate control system to the panel structure such that the climate control system is being located in the first compartment when the panel structure is attached to the front compartment structure; and sealing means configured for sealing off the first compartment of the front compartment in an air-flow restricting manner against the second compartment when the panel structure is attached to the front compartment structure.

The panel structure of the first aspect of this disclosure may provide for a design of a front compartment of a vehicle, when it is being inserted therein, which fulfills several preferences that improve the user experience with the vehicle and the assembly thereof, as explained in more detail below.

One of these preferences may be a low NVH (noise, vibration, harshness) level inside the cabin compartment of the vehicle, which may be provided by the panel structure. The panel structure may be substantially stiff, for example, which further increases the NVH decreasing capabilities of the vehicle. Substantially stiff may mean that the panel structure can resist deformation caused by dynamic forces acting thereupon, in particular until a level defined by its design and/or material. The panel structure may stiffen the entire front compartment structure, thereby reducing NVH transferred from the front compartment, e.g., from the road, an electric motor and/or the climate control system, to the cabin compartment.

Another one of these preferences may be to have a safe, simple and quick assembly of the climate control system inside the front compartment. In this regard, the panel structure comprises second attachment means configured for attaching the climate control system thereto. Thereby, the panel structure together with the climate control system may be preassembled as a climate control structure before the climate control structure is inserted into the front compartment and attached to the front compartment structure via the first attachment means. Such preassembly outside of the narrow front compartment may be made much easier, more ergonomically and faster.

Yet another one of these preferences may be to supply clean air from the climate control system inside the front compartment to the cabin compartment, in which the passengers of the vehicle are located. To achieve this, the panel structure has sealing means, which may seal off the first compartment, which may also be referred to as an air climate control system compartment, at least partially in an air-flow restricting manner, in particular substantially air-tight manner, against the second compartment of the front compartment, which may correspond to the front compartment without the first compartment. At least partially air-flow restricting in this regard means in particular that the sealing is provided at least along the panel structure. In other words, the air-flow restricting sealing is provided at least between the panel structure and the front compartment structure, to which it is being attached. Air-flow restricting means that the air is being restricted from flowing through the sealing, however, there may be minor air-leakage which can possibly not be prevented, i.e., when the sealing is damaged. The sealing, however, may be substantially air-tight, which means as air-tight as possible. Preferably, but not necessary, is the first compartment altogether, i.e., from sides other than the panel structure, substantially sealed in an air-flow restricting manner, in particular substantially air-tight, so as to prevent possibly polluted air from entering the first compartment. The air-tight sealing excludes specific air ducts of the climate control system provided for air intake and outtake. Thereby, the climate control system may for the most part or only use air via one or more air ducts as intakes for the climate control system rather than using air from inside the second compartment of the front compartment, which may be polluted or not desired as air for the cabin compartment. In particular, the sealing means may be configured for sealing off the climate control system compartment in an air-flow restricting manner, in particular substantially air-tight, against the second compartment of the front compartment. In this case, the air for the climate control system may be coming from the one or more air ducts of the climate control system only.

The panel structure may in particular be configured as a shear plane structure. As such, the shear plane structure is specifically designed to withstand shear forces acting thereon.

In an example, the panel structure may comprise a panel section and at least one beam section extending along a side of the panel section. The at least one beam section may be shaped as a beam. Such beam may be a cross-sectional polygonal, e.g., rectangular or otherwise rigid, shape. The beam may be hollow and/or a lengthy structure. The at least one beam section stiffens the panel structure and thereby the entire front compartment or front compartment structure further, effectively reducing NVH further. Accordingly, this may provide for further reduction of NVH and more secure attachment of the climate control system and the front compartment structure to the panel structure. The side of the panel section, along which the at least one beam section extends, may be a long side of the panel section.

In an example, the panel section may be thinner than the at least one beam section. This means that a thickness of the panel section is less than a thickness of the at least one beam section. In particular, the panel section may be thinner than the at least one beam section in a direction of extension of the panel section that is perpendicular to the direction of extension of the at least one beam section along the side of the panel section. In particular, the panel section may be substantially planar. This provides for a light yet stiff panel structure.

In an example, the panel structure may comprise two beam sections. This further stiffens the panel structure for increased NVH reduction. Also, the attachment means may be arranged on two beam sections, which makes the attachment to the front compartment structure and the climate control system more secure.

In an example, the two beam sections may be extending along opposite sides of the panel section. The opposite sides may be long sides of the panel structure. In particular, the two beam sections may be extending substantially in parallel to one another. It has been found that this provides for a particularly stiff and easy to attach design of the panel structure.

In an example, the first attachment means may be arranged on the panel section and at least one of the at least one beam section. Thereby, both types of sections may serve for improved attachment to the front compartment structure.

In an example, the second attachment means may be arranged on the panel section and at least one of the at least one beam section. Thereby, both types of sections may serve for improved attachment to the climate control system.

In an example, the sealing means may be arranged at least at opposite sides of the panel section. In particular, the opposite sides may be short sides of the panel section, contrary to the long sides of the panel section, along which the at least one beam section may be extending. Further, the sealing means may be arranged on a substantially flat surface of the panel section at the opposite short sides of the panel section.

In an example, the sealing means may be configured as at least one sealing strip. In particular, several sealing strips may be used to achieve the desired air-tight sealing. The sealing strips may be made from an elastomer or similar, and attached to the panel structure by adhesive, for example.

In an example, the panel structure may comprise at least one depressed portion. The at least one depressed portion may be depressed relative to a thereto adjacent portion of the panel structure. The at least one depressed portion may have a face configured for arrangement at, in particular surface contact with, a counter face of the front compartment structure. In particular, the panel structure may comprise two or more depressed portions. Thereby, the sealing of the first compartment by the panel structure and the attachment of the panel structure to the front compartment structure are further facilitated. The at least one depressed portion may be arranged at the panel section. It may be arranged between the two beam sections. In particular, two depressed portions may be arranged opposite of one another, in particular at the short sides of the panel structure, thereby conforming in shape to side structures of the front compartment structure.

In an example, the panel structure may be designed as an extrusion part. An extrusion part may be acquired by the process of extrusion. For the extrusion, the material from which the panel structure is to be manufactured may be pushed through a die having the desired cross-section of the extrusion part. This makes the panel structure particularly cost-effective. The depressed portions may consequently be provided by depressing portions of the panel structure.

In an example, the panel structure may be made from aluminum. Aluminum was found to make the panel structure sufficiently stiff yet light weight for the application in vehicles. It may be easily and cost-effectively processed by extrusion.

According to a second aspect of this disclosure, there is provided a climate control structure, the climate control structure comprising the panel structure of the first aspect of this disclosure and a climate control system, the climate control system being attached to the panel structure.

According to a third aspect of this disclosure, there is provided a front compartment of a vehicle, the front compartment comprising a front compartment structure and the climate control structure of the second aspect of this disclosure, the panel structure being attached to the front compartment structure, and the sealing means sealing off the first compartment of the front compartment in an air-flow restricting manner against the second compartment.

According to a fourth aspect of this disclosure, there is provided a vehicle comprising the front compartment of the third aspect of this disclosure.

According to a fifth aspect, there is provided a method for partially assembling a front compartment of a vehicle according to the third or fourth aspect of this disclosure, the method comprising:
- assembling the climate control structure by attaching the climate control system to the panel structure,
- inserting the assembled climate control structure into the front compartment, and
- attaching the assembled climate control structure to the front compartment structure.

It should be noted that the above examples may be combined with each other irrespective of the aspect involved. Accordingly, the method may be combined with structural features and, likewise, the panel structure, climate control structure, front compartment and vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view on a front face of a panel structure according to this disclosure;
- Figure 2: shows a cross-sectional view on the panel structure of Fig. 1;
- Figure 3: shows a perspective view of a back face of the panel structure from Figs. 1 and 2;
- Figure 4: shows a schematic illustration of a part of a vehicle comprising a front compartment, in which the panel structure of Figs. 1 to 3 is installed; and
- Figure 5: shows a schematic illustration of steps of a method for partially assembling a front compartment of a vehicle.

### DETAILED DESCRIPTION

The Figures are merely schematic representations and serve only to illustrate examples of the disclosure. Identical or equivalent elements are in principle provided with the same reference signs.

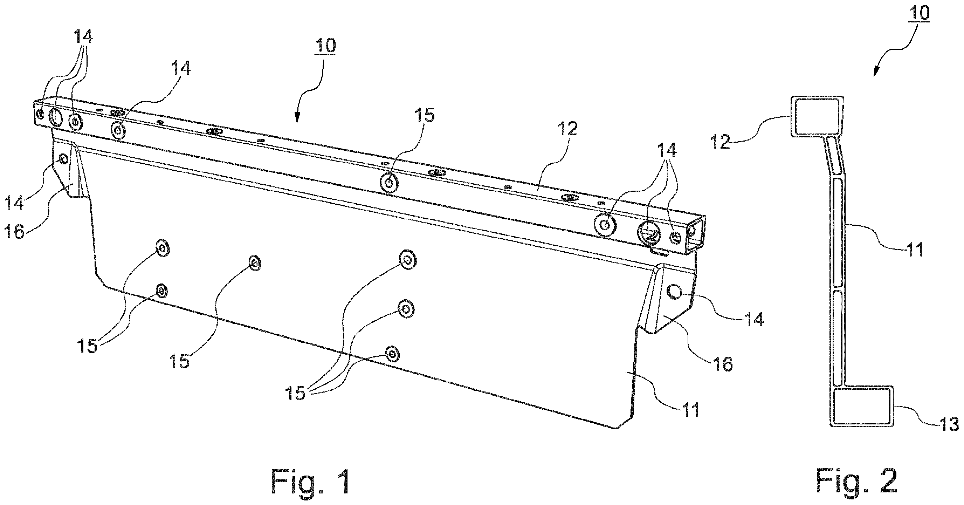

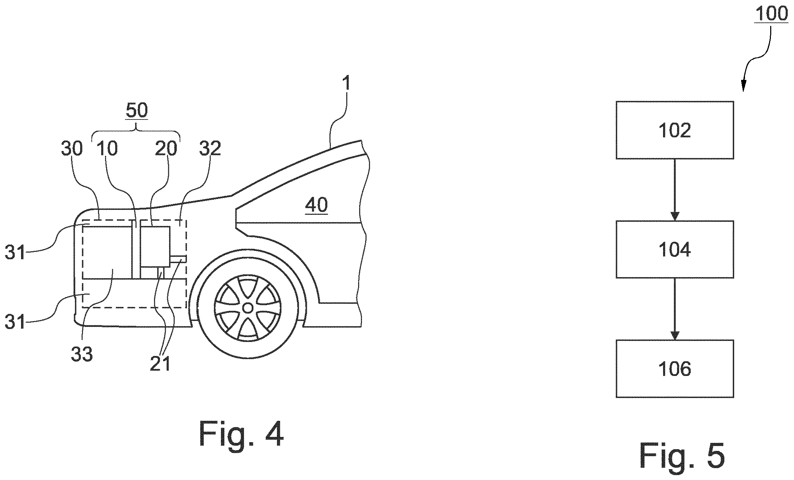

Figures 1 to 3 show different views on the same panel structure 10 for a front compartment 30 of a vehicle 1 (see Fig. 4).

Figure 4 shows the assembly of the front compartment 30 of the vehicle 1 as schematic illustration.

In the front compartment 30, several systems or at least some of their components may be housed. In an electric vehicle, for example, the electric motor (not shown) may be included in the front compartment 30. Another system inside the front compartment 30 is the climate control system 20. The climate control system 20 may comprise or be an air conditioning system of the vehicle 10. Accordingly, the climate control system 20 may comprise components such as a compressor, condenser, valve, filter and/or airduct, for example. Several other systems may be also located inside the front compartment 30.

The front compartment 30 may transport noise, vibration and harshness (NVH) to the adjacent thereto located cabin compartment 40, which may come from the systems or components inside the front compartment 30 as well as the environment, e.g., from the road. To reduce the NVH in the cabin compartment 40, the panel structure 10 may have a substantially stiff design, stiffening a front compartment structure 31, to which it is attached as will be explained further below.

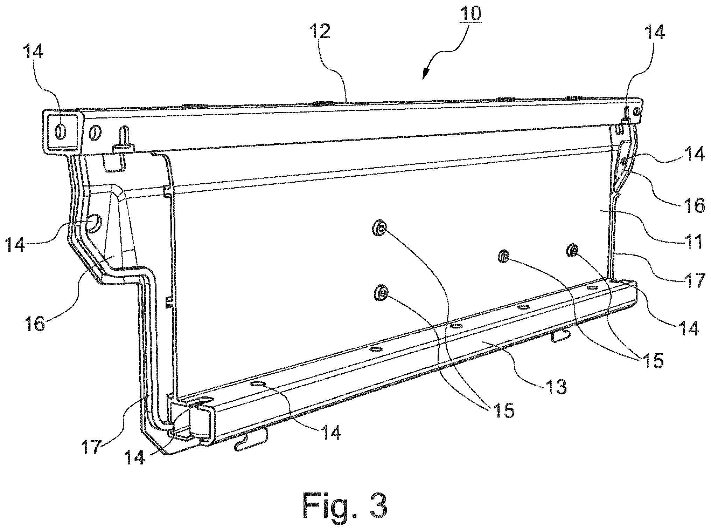

In particular, the panel structure 10 comprises three sections, namely a panel section 11, a first beam section 12 and a third beam section 13. The panel section 11 may be substantially flat or, in other words, planar. The panel section 11 comprises opposite planar faces, one of these being shown in Fig. 2 and the opposite one being shown in Fig. 3. Further, the panel section 11 comprises sides located at the sides of these planar faces. The beam sections 12, 13 may be located at such opposite long sides of the panel section 11 and extending in length along the opposite long sides. The beam sections 12, 13 may be rectangular or otherwise shaped beams, stiffening the overall panel structure 10.

The panel structure 10 may be made from one piece or, in other words, designed integrally. For example, the panel structure 10 may be an extruded part. It may comprise or be made from aluminum, which includes aluminum alloys.

The panel structure 10 comprises several first attachment means 14 configured for attaching the panel structure 10 to the front compartment structure 31 of the front compartment 30 as well as second attachment means 15 configured for attaching the climate control system 20 to the panel structure 10. The first and/or second attachment means 14, 15 may be designed as through-holes, threaded holes and/or bushings, for example.

Besides NVH reduction, the panel structure 10 provides for simpler, more ergonomic, and faster assembly of the front compartment 30 of the vehicle 1, as illustrated by the method 100 of Fig. 5, showing the steps for such an improved assembly.

In a first step 102 of method 100, a climate control structure 50 is assembled by attaching the climate control system 20 to the panel structure 10 by means of the second attachment means 15. Any means corresponding to the second attachment means 15, e.g., screws or bolts, may be used for this attachment. The first step 102 may therefore be carried out outside of the front compartment 30 or vehicle 1 and be a preassembly step. The preassembly has the advantage that a worker and/or robot has sufficient space for the assembly outside of the front compartment 30, easily reaching all the second attachment means 15 and establishing the attachment.

Then, in a second step 104 of method 100, the assembled climate control structure 50 is inserted into the front compartment 30 in the correct position and orientation to be attached to the front compartment structure 31.

Finally, in a third step 106 of method 100, the assembled climate control structure 50, specifically the panel structure 10 thereof, is attached via the first attachment means 14 to the front compartment structure 31.

Further, the panel structure 10 may ensure the supply of clean air from the climate control system 20 inside the front compartment 30 to the cabin compartment 40, in which the passengers of the vehicle 1 are located. To achieve this, the panel structure 10 has a sealing means 17, which seals off a first compartment 32 as part of the front compartment 30, which may be configured to comprise the climate control system 20, in an air-flow restricting manner, in particular substantially air-tight, against a second compartment 32 of the front compartment 30, i.e., the front compartment 30 without the first compartment 32. Accordingly, by virtue of the panel structure 10, between the first compartment 32 and the second compartment 33, there may be substantially no or no significant air-leak between the panel structure 10 and the front compartment structure 31. Thereby, the climate control system 20 may for the most part or only use air via one or more air ducts 21 as intakes for the climate control system 20 rather than using air from inside the rest of the front compartment 30, which may be polluted or not desired as air for the cabin compartment 40.

As may be seen from Fig. 3, the sealing means 17 are designed as sealing strips, e.g., made from an elastomer, extending on the back face of the panel section 11 of the panel structure 10 between the two beam sections 12, 13. Further sealing means 17 may be provided on the beam sections 12, 13 or, the beam sections 12, 13 may be provided as sealing means 17 as such. When assembling the front compartment 30, the sealing means 17 are pressed and, optionally, adhered, against the front compartment structure 31, which may be from metal, for example, when attaching the panel structure 10 to the front compartment structure 31, thereby forming the air-flow restricting sealing between the first compartment 32 and the second compartment 33.

The panel structure 10 further comprises depressed portions 16 at its short sides and located on the panel section 11. These depressed portions 16 are depressed relative to the generally planar shape of the panel section 11. The depressed portions 16 conform in shape to the front compartment structure 31, in particular via surface contact, when attaching the panel structure 10 thereto. Thereby, the sealing and attachment may be enhanced. For example, it is not necessary to use excessive amounts of sealing means 17 when the shapes of the panel structure 10 and the front compartment structure 31 correspond to each other to a high degree, which is herein enabled by the simple yet effective depressed portions 16. Another depression or bent at the panel section 11, in particular substantially extending along its entire length, may be seen best in Fig. 2, also provided for conforming to the shape of the front compartment structure 31.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: vehicle
- 10: panel structure
- 11: panel section
- 12: first beam section
- 13: second beam section
- 14: first attachment means
- 15: second attachment means
- 16: depressed portion
- 17: sealing means
- 20: climate control system
- 21: air duct
- 30: front compartment
- 31: front compartment structure
- 32: first compartment
- 33: second compartment
- 40: cabin compartment
- 50: climate control structure
- 100: method
- 102: first step
- 104: second step
- 106: third step

## Claims

1. A panel structure (10) for noise, vibration and harshness reduction inside a front compartment (30) of a vehicle (1), the panel structure (10) comprising: first attachment means (14) configured for attaching the panel structure (10) to a front compartment structure (31) of the front compartment (30) of the vehicle (1) such that the front compartment (30) is separated into a first compartment (32) and a second compartment (33); second attachment means (15) configured for attaching a climate control system (20) to the panel structure (10) such that the climate control system (20) is being located in the first compartment (32) when the panel structure (10) is attached to the front compartment structure (31); and sealing means (17) configured for sealing off the first compartment (32) of the front compartment (30) in an air-flow restricting manner against the second compartment (33) when the panel structure (10) is attached to the front compartment structure (31).

2. The panel structure (10) of claim 1, the panel structure (10) comprising a panel section (11) and at least one beam section (12, 13) extending along a side of the panel section (11).

3. The panel structure (10) of claim 2, the panel section (11) being thinner than the at least one beam section (12, 13) in a direction of extension of the panel section (11) that is perpendicular to the direction of extension of the at least one beam section (12, 13) along the side of the panel section (11).

4. The panel structure (10) of claim 2 or 3, the panel structure (10) comprising two beam sections (12, 13).

5. The panel structure (10) of claim 4, the two beam sections (12, 13) extending along opposite sides of the panel section (10).

6. The panel structure (10) of any one of claims 2 to 5, the first attachment means (14) being arranged on the panel section (11) and at least one of the at least one beam section (12, 13).

7. The panel structure (10) of any one of claims 2 to 5, the second attachment means (15) being arranged on the panel section (11) and at least one of the at least one beam section (12, 13).

8. The panel structure (10) of any one of claims 2 to 5, the sealing means (17) being arranged at least at opposite sides of the panel section (11).

9. The panel structure (10) of any one of the previous claims, the sealing means (17) being configured as at least one sealing strip.

10. The panel structure (10) of any one of the previous claims, the panel structure (10) comprising at least one depressed portion (16), the at least one depressed portion (16) being depressed relative to a thereto adjacent portion of the panel structure (10) and having a face configured for arrangement at a counter face of the front compartment structure (31).

11. The panel structure (10) of any one of the previous claims, the panel structure (10) being designed as an extrusion part and made from aluminum.

12. A climate control structure (50), the climate control structure (50) comprising the panel structure (10) of any one of the previous claims and a climate control system (20), the climate control system (20) being attached to the panel structure (10).

13. A front compartment (30) of a vehicle (1), the front compartment (30) comprising a front compartment structure (31) and the climate control structure (50) of claim 12, the panel structure (10) being attached to the front compartment structure (31), and the sealing means (17) sealing off the first compartment (32) of the front compartment (30) in an air-flow restricting manner against the second compartment (33).

14. A vehicle (1) comprising the front compartment (30) of claim 13.

15. A method (100) for assembling a front compartment (30) of a vehicle (1) according to claim 13, the method (100) comprising:
- assembling the climate control structure (50) by attaching the climate control system (20) to the panel structure (10),
- inserting the assembled climate control structure (50) into the front compartment (30), and
- attaching the assembled climate control structure (50) to the front compartment structure (31).

## Amended claims

### Amended claims in accordance with Rule 137(2) EPC.

1. A panel structure (10) for noise, vibration and harshness reduction inside a front compartment (30) of a vehicle (1), the front compartment (30) being located adjacent to a cabin compartment (40) of the vehicle (1), the panel structure (10) comprising: first attachment means (14) configured for attaching the panel structure (10) to a front compartment structure (31) of the front compartment (30) of the vehicle (1) such that the front compartment (30) is separated into a first compartment (32) and a second compartment (33); second attachment means (15) configured for attaching a climate control system (20) to the panel structure (10) such that the climate control system (20) is being located in the first compartment (32) when the panel structure (10) is attached to the front compartment structure (31); and sealing means (17) configured for sealing off the first compartment (32) of the front compartment (30) in an air-flow restricting manner against the second compartment (33) when the panel structure (10) is attached to the front compartment structure (31), the panel structure (10) comprising a panel section (11) and at least one beam section (12, 13) extending along a side of the panel section (11).

2. The panel structure (10) of claim 1, the panel section (11) being thinner than the at least one beam section (12, 13) in a direction of extension of the panel section (11) that is perpendicular to the direction of extension of the at least one beam section (12, 13) along the side of the panel section (11).

3. The panel structure (10) of claim 1 or 2, the panel structure (10) comprising two beam sections (12, 13).

4. The panel structure (10) of claim 3, the two beam sections (12, 13) extending along opposite sides of the panel section (10).

5. The panel structure (10) of any one of claims 1 to 4, the first attachment means (14) being arranged on the panel section (11) and at least one of the at least one beam section (12, 13).

6. The panel structure (10) of any one of claims 1 to 5, the second attachment means (15) being arranged on the panel section (11) and at least one of the at least one beam section (12, 13).

7. The panel structure (10) of any one of claims 1 to 6, the sealing means (17) being arranged at least at opposite sides of the panel section (11).

8. The panel structure (10) of any one of the previous claims, the sealing means (17) being configured as at least one sealing strip.

9. The panel structure (10) of any one of the previous claims, the panel structure (10) comprising at least one depressed portion (16), the at least one depressed portion (16) being depressed relative to a thereto adjacent portion of the panel structure (10) and having a face configured for arrangement at a counter face of the front compartment structure (31).

10. The panel structure (10) of any one of the previous claims, the panel structure (10) being designed as an extrusion part and made from aluminum.

11. A climate control structure (50), the climate control structure (50) comprising the panel structure (10) of any one of the previous claims and a climate control system (20), the climate control system (20) being attached to the panel structure (10).

12. A front compartment (30) of a vehicle (1), the front compartment (30) comprising a front compartment structure (31) and the climate control structure (50) of claim 11, the panel structure (10) being attached to the front compartment structure (31), and the sealing means (17) sealing off the first compartment (32) of the front compartment (30) in an air-flow restricting manner against the second compartment (33).

13. A vehicle (1) comprising the front compartment (30) of claim 12.

14. A method (100) for assembling a front compartment (30) of a vehicle (1) according to claim 12, the method (100) comprising:
- assembling the climate control structure (50) by attaching the climate control system (20) to the panel structure (10),
- inserting the assembled climate control structure (50) into the front compartment (30), and
- attaching the assembled climate control structure (50) to the front compartment structure (31).
